# EUROPEAN PATENT SPECIFICATION

(11) **EP 4 270 426 B1**
(45) Date of publication and mention of the grant of the patent: **01.01.2025**
(21) Application number: 22169884.8
(22) Date of filing: 26.04.2022
(51) Int. Cl.: H01F 27/28, H01F 38/08, H01F 27/10, H01F 41/04, B23K 1/00, B23K 20/10, B23K 20/12, H01F 27/40

(54) **METHOD FOR PRODUCING A COOLING CHANNEL IN A WINDING FOR A WELDING TRANSFORMER AND WINDING COMPRISING A COOLING CHANNEL FOR A WELDING TRANSFORMER**
VERFAHREN ZUR HERSTELLUNG EINES KÜHLKANALS IN EINER WICKLUNG FÜR EINEN SCHWEISSTRANSFORMATOR UND WICKLUNG MIT EINEM KÜHLKANAL FÜR EINEN SCHWEISSTRANSFORMATOR
PROCÉDÉ DE PRODUCTION D'UN CANAL DE REFROIDISSEMENT DANS UN ENROULEMENT D'UN TRANSFORMATEUR DE SOUDAGE ET ENROULEMENT COMPRENANT UN CANAL DE REFROIDISSEMENT POUR UN TRANSFORMATEUR DE SOUDAGE

(43) Date of publication of application: 01.11.2023
(73) Proprietor: Robert Bosch GmbH, 70442 Stuttgart (DE)
(72) Inventor: Logar, Andraz, 4000 Kranj - Kokrica (SI); Cernivec, Gregor, 1218 Komenda (SI); Klobcar, Damjan, 8000 Novo Mesto (SI)

(56) References cited:
- EP-A1- 3 796 345
- US-A1- 2010 156 585
- US-B1- 6 278 353

## Description

The present invention relates to a method for producing a cooling channel in a winding for a welding transformer and a winding comprising a cooling channel for a welding transformer. In particular, the winding is a secondary winding for the welding transformer.

Welding transformers are used in welding devices for producing a connection of workpieces made from metal. The welding transformer is operated together with a welding tool, which is electrically connected to the secondary side of the welding transformer. Herein, the welding tool may be guided by hand or a robot.

The transformer is often attached to the welding tool to omit a bulky low-voltage cable. In such a case, the transformer needs to be optimized in weight and size to make the handling of the welding tool easy. This facilitates, too, to keep the power consumption of the welding tool low.

The transformer transforms a primary alternating current into a secondary alternating current with the desired voltage and time characteristics. The secondary side of the transformer is connected to a rectifier which rectifies the electric current output from the transformer and provides a direct electric current to at least one welding electrode of the welding tool. The transformer and the rectifier may form a transformer-rectifier-unit.

For producing a welding spot or a welding seam, electrode(s) of the welding tool contact(s) at least one workpiece. The welding transformer is controlled such that it produces electric current flowing via the electrode(s) into the workpieces to melt the metal such that the workpieces are connected by a welding spot or a welding seam.

In the operation of the welding device, high electric currents are produced, which heat up the transformer and the rectifier. To avoid overheating of the transformer, the transformer and the rectifier have to be cooled. The cooling may be accomplished by a cooling media flowing through cooling channels formed in the windings of the welding transformer.

The windings, in particular the secondary winding, of the welding transformer form a part having a rather complex geometry. The windings may be made from copper. For forming the cooling channel, the windings are machined to produce the required holes for the cooling channel. The holes comprise blind holes and through holes which cross each other. To prevent cooling media leaking from the cooling channels, the holes are to be sealed to the outside of the windings such that the sealed holes withstand a pressure of up to 12 bar, that is 12 * 100 kPa, without leakage.

Currently, sealing of the holes is made by soldering a plug into the holes by using a solder containing phosphorus. However, the soldering (brazing) process is time consuming and must be performed by a well-trained person. The quality of the soldered connection depends to a great extent on the skills of the person performing the soldering. To avoid these problems, glued grub screws are used for sealing the holes.

A further problem known for a long time in the technical field of welding transformers is that cooling media, especially aggressive cooling water, leads to corrosion destroying soldered/brazed connections of the copper material used for the windings and/or the sealed holes of the cooling channel of the windings. This affects especially plugs of the cooling channel as there is contact of three different materials, namely copper, brass and silver solder, with the cooling media. Phosphorous based solder material and/or zinc of the brass grub screws might get flushed by a high content of sulphur in the cooling media. High content of chlorine in the cooling media flushes the gluing from the glued grub screws.

As a result, cooling media, especially cooling water, is leaking from the cooling channels. Consequently, the cooling of the welding transformer cannot be secured. Moreover, the welding device may be damaged and/or polluted. Thus, the required quality of the welded products cannot be guaranteed. Due to a resulting failure of the welding device a machine breakdown may occur in a production line. Document US 2010/0156585 A1 discloses a welding transformer with winding elements comprising cooling ducts. Openings in the cooling ducts are provided with recesses for receiving sealing elements.

All these difficulties are especially unacceptable for any production or processing line in which the welding device is to be used.

Therefore it is the object of the present invention to provide a method for producing a winding for a welding transformer and a winding for a welding transformer, which solve the above-mentioned problems and enable in particular to cool a welding transformer in a stable and reliable manner with low costs and which is thus usable in an industrial process of a production line.

This object is solved by a method for producing a cooling channel in a winding for a welding transformer according to claim 1. In the method, a holder holds a winding module which comprises a first winding element, a second winding element and a base element, wherein each one of the first and second winding elements protrudes from the base element and wherein the first and second winding elements are positioned spaced to each other at the base element so that the winding module has a t-cross-section, wherein the first winding element comprises at least one window for accommodating a part of a core of the welding transformer, wherein the second winding element comprises at least one window for accommodating a part of a core of the welding transformer, and wherein the base element comprises grooves separating the base element into sections such that at least one of the sections is connected to the first and second winding elements and such that at least one of the sections is connected to only one of the first and second winding elements, and sealing a plug into a first hole of a cooling channel, which first hole is open to the outside of one of the elements, by controlling a movement of the plug relative to the first hole so that a solid-state welding joint is produced by material of the plug and material of the winding module, in which the first hole is positioned, wherein the holder holds the winding module such that a movement between the winding module and the holder is prevented while the step of sealing is performed.

The described method produces a winding which minimizes the risk of corrosion. This is achieved by producing the winding with joints/connections the stability of which is not affected by the chemical content of a cooling media contacting the joints/connections. The winding is produced preferably without soldered/brazed connections and/or without glued grub screws having contact to the cooling media of the cooling channel. Thus, leaking of the cooling channel is no problem anymore. This is also the fact, when aggressive cooling media is to be used in the cooling channels, as described with reference to the state of the art.

The resulting winding enables in particular to cool a welding transformer in a stable and reliable manner. Herein, the winding may be produced with higher process reliability, even if the shape or design of the winding is unchanged and thus still complex. This is very advantageous as regards a careful handling of resources.

A further advantage lies in that the described method uses a plug for sealing the holes of the cooling channel to the outside, wherein the plug has the same material as the cooling channel. Due to this, corrosion of the sealed holes of the cooling channel is prevented very effectively and securely.

In addition, the plug usable for sealing a hole of the cooling channel may have a less complex shape. The shape might be a rectangular shape, possibly comprising only one shoulder. Thus, the shape of the plug is less intricate than the shape of a screw and even the shape of a conventional plug used in soldering, for example. Consequently, the cost of the plug used in the described method is reduced.

Moreover, the holes of the cooling channel require no further preparation for securely sealing a hole with the plug. This results in further cost savings.

As a result, the winding can be produced less intricate than in the state of the art. Each one of the above-mentioned features contributes to perform the sealing of the holes of the cooling channel much faster than conventionally. Altogether, the described method is less time-consuming. This leads to reduction of costs, too.

Thus, the method for producing the described winding is very time-efficient and demands lower costs than known methods in this regard.

All these advantages result in a winding which is cost effective in production and maintenance. The same is valid for a welding tool, to which the winding is attached, and a generic welding device.

Altogether, the failure of the generic welding device can be minimized. This leads to a prolonged life time of the welding device, as well.

And, the use of the described winding in a welding device can contribute to a stable welding method in which the welding may be performed with high quality. This qualifies the winding to be used in a welding device applied in an industrial process of a production line.

Advantageous further developments of the method are given in the dependent claims.

In the method, the solid-state welding joint is produced by coalescence of contacting surfaces of the plug and the first hole below the melting point of the materials without supplying an additional joining material.

The solid-state welding joint may be produced by ultrasonic welding or rotation friction welding or friction welding.

Possibly, the movement of the plug relative to the first hole is controlled so that the hole sealed by the solid-state welding joint withstands without leakage a pressure of up to 12 * 100 kPa which is exerted by cooling media.

The material of the plug and the material, in which the first hole is positioned, is the same.

In one specific implementation form, the plug has a shoulder at the side of the plug which is inserted in the first hole before the step of sealing is performed.

The method may further comprising at least one step of the steps of milling the first holes into the first and second winding elements as well as the base element to form the cooling channel in the winding module, and providing each first hole with one solid-state welding joint for sealing the cooling channel to the outside of the winding module, and milling second holes into the base element, and providing at least one of the second holes with an insert for connecting the winding module with other parts of a transformer-rectifier-unit.

Sealing of a plug into a first hole according to the described method may be performed by a device for producing a welding joint in a cooling channel for a winding for a welding transformer, wherein the device comprises a control unit to control a movement of a plug in the first hole, and a holder for holding a winding module of the winding when sealing the plug into the first hole.

The above-described object is further solved by a winding for a welding transformer according to claim 9. The winding comprises a winding module which comprises a first winding element framing at least one window for accommodating a part of a core of the welding transformer, a second winding element framing at least one window for accommodating a part of the core of the welding transformer, and a base element, wherein each one of the first and second winding elements protrudes from the base element, wherein the first and second winding elements are positioned spaced to each other at the base element so that the one-piece winding module has a t-cross-section, and wherein the base element comprises grooves which separates the base element into sections, and wherein at least one of the sections is connected to the first and second winding elements, wherein at least one of the sections is connected to only one of the first and second winding elements, wherein the first and second winding elements as well as the base element comprise a cooling channel for flowing a coolant through the first and second winding elements as well as the base element, and wherein a plug is sealed in a first hole of the cooling channel as a solid-state welding joint produced by the material of the plug and the material, in which the first hole is positioned.

The winding achieves the same advantages as they are mentioned above in respect of the method.

Advantageous further developments of the winding are given in the dependent claims.

Herein, each one of the first and second winding elements may comprise at least one hole to form the cooling channel, wherein at least one hole in the first and/or second winding elements is a blind hole and at least one hole in the first and/or second winding elements is a through hole so that the holes cross each other to form the cooling channel.

In one implementation form, the first winding element forms a frame for two windows, the windows of the first winding element are spaced from each other in the first winding element, the second winding element forms a frame for two windows, and the windows of the second winding element are spaced from each other in the second winding element.

The material of the winding module may be metal, in particular copper or aluminium.

The above-described winding may be part of a welding transformer which further comprises a core, and a primary winding, wherein the winding is positioned on the secondary side of the transformer, and wherein the primary winding is mounted to the core and to the secondary winding.

The above-described welding transformer may be part of a welding tool for producing an article. The welding tool may further comprise a control unit configured to adapt a welding current for forming the article by joining at least two parts of one workpiece and/or at least two workpieces by at least one welding joint.

The above-described welding tool may be part of a welding device. The welding device may further comprise a device for moving the welding tool according to a predetermined moving profile along the at least one workpiece, and wherein the article is a vehicle body.

Further possible implementations of the invention comprise also combinations of features or styles described above or in the following with reference to the embodiments, even if they are not explicitly mentioned. Herein, the person skilled in the art will also add single aspects as improvements or additions to the respective basic form of the invention.

In the following, the invention is described in more detail by means of embodiments and with reference to the appended drawing figures, wherein:
Fig. 1 shows a schematic block diagram of a plant having a welding device comprising a welding transformer according to a first embodiment;
Fig. 2 shows a transformer-rectifier unit according to the first embodiment;
Fig. 3 shows a winding module according to the first embodiment which module may be used for a secondary winding of the transformer-rectifier unit of Fig. 2;
Fig. 4 shows a winding module according to a second embodiment, which module may be used for a secondary winding of the transformer-rectifier unit of Fig. 2;
Fig. 5 to Fig. 10 show steps of a method for sealing a cooling channel which steps may be used in a method for producing a transformer-rectifier unit of Fig. 2;
Fig. 11 shows the winding which is produced by the method according to the second embodiment;
Fig. 12 shows a top view and Fig. 13 a side view of a plug usable in the method illustrated by Fig. 5 to Fig. 10;
Fig. 14 shows a top view of a part of the winding module in which a cooling channel is sealed with a plug of Fig. 12 and Fig. 13;
Fig. 15 shows a side view of a plug which is alternatively usable in the method illustrated by Fig. 5 to Fig. 10;
Fig. 16 to Fig. 19 show steps of a method for sealing a cooling channel which steps may be used in a method for producing a transformer-rectifier unit of Fig. 2 according to a third embodiment; and
Fig. 20 to Fig. 22 each show a sealing device performing a sealing method according to a fourth embodiment.

In the drawing figures, the same or functionally same elements are provided with the same reference signs unless given otherwise.

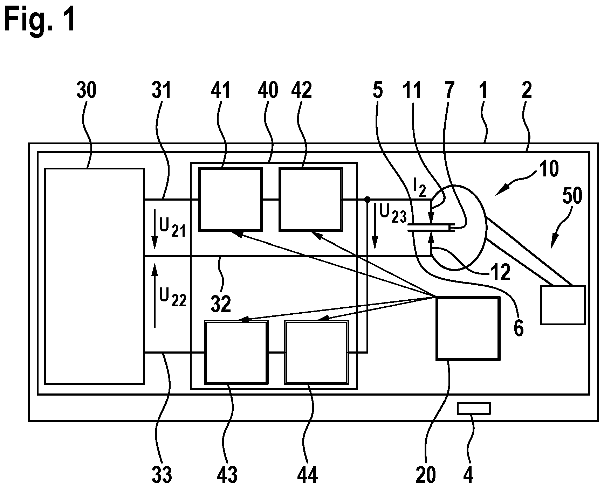

Fig. 1 shows very schematically a plant 1 which comprises a welding device 2, in particular a resistance welding device. The plant 1 is, for example, a production plant for producing articles 4 like vehicles, household devices, heaters, or the like.

In the plant 1, metal workpieces 5, 6 can be connected or joint by welding, especially resistance welding, so that a welded joint 7 is produced. For this purpose, the welding device 2 of Fig. 1 has a welding tool 10 in the form of a welding gun having two welding electrodes 11, 12. The welding device 2 further comprises a control device 20, a welding transformer 30, and a rectifier 40. In the example of Fig. 1, the welding device 2 further comprises a device 50 for guiding the welding tool 10. The device 50 might be a robot.

The welding tool 10 may perform in particular resistance welding. The welding transformer 30 is possibly implemented as an intermediate frequency direct current transformer (MF-DC transformer). Herein, the rectifier 40 is mountable on the welding transformer 30. Thus, a transformer-rectifier unit is formed.

The welding device 2 can use the welding tool 10 to produce the welded joint 7 under the control of the control device 20. It is possible herein, for example, that two edges or corners of a single workpiece 5 are connected to one another by forming one or more welded joints 7. Regardless of how many workpieces 5, 6 are connected to each other by means of at least one welded joint 7, the welded joint 7 can be implemented as a spot weld or a weld seam or a combination thereof. The device 50 may move the welding tool 10 according to a predetermined moving profile along the at least one workpiece 5, 6.

In a welding method for welding with the welding device 2, at least one of the welding electrodes 11, 12 contacts at least one workpiece 5, 6, and at least one welding transformer 30 is used to weld the at least one workpiece 5, 6.

On the secondary side of the welding transformer 30, there is a first secondary voltage U21 between the first and second output terminals 31, 32 of the welding transformer 30 in operation of the transformer 30. In addition, a second secondary voltage U22 exists between the second and third output terminals 32 and 33 of the welding transformer 30 in operation of the transformer 30. The first secondary voltage U21 and the second secondary voltage U22 form a welding voltage U23 at the output of the rectifier unit 40, which results in a welding current I2.

The rectifier 40 has in the example of Fig. 1 first to fourth semiconductor devices 41 to 44, for example transistors 41 to 44.

The first semiconductor device 41 is connected to the first output terminal 31 of the welding transformer 30. The second semiconductor device 42 is connected in series to the first semiconductor device 41. Thus, the series connection composed of the first and second semiconductor devices 41, 42 is connected between the welding transformer 30 and the welding tool 10. More precisely, the series connection composed of the first and second semiconductor devices 41, 42 is connected between the secondary side of the welding transformer 30 and the first welding electrode 11.

The second welding electrode 12 is directly connected to the second output terminal 32 of the welding transformer 30.

The third semiconductor device 43 is connected to the third output terminal 32 of the welding transformer 30. The third semiconductor device 43 and the fourth semiconductor device 44 are connected in series. Thus, the series connection composed of the third and fourth semiconductor devices 43, 44 is connected between the welding transformer 30 and the welding tool 10. More precisely, the series connection formed by the third and fourth semiconductor devices 43, 44 is connected between the welding transformer 30 and the first welding electrode 11.

The control device 20 can also be configured to switch the polarity of the welding voltage U23 applied between the welding electrodes 11 and 12. The polarity of the welding voltage U23 can be switched as desired by controlling the switching of the corresponding transistors 41, 42, 43, 44. According to one possibility for the polarity of the welding voltage U23, the electrode 11 is positively polarized and the electrode 12 is negatively polarized. Alternatively, the electrode 11 is negatively polarized and the electrode 12 is positively polarized.

The switching of the polarity of the welding voltage U23 by the welding device 2 can be used advantageously in sheet metal combinations, where undesirable burn-up or material migration of the welding electrode is caused in the welding gun. Furthermore, the resistance welding device 2 can be used particularly advantageously in welding chain links and/or in welding heating bodies.

If it is not required to switch the polarity of the welding voltage U23, which is applied between the welding electrodes 11 and 12, one of the transistors of the series connection of the transistors 41, 42 and one of the transistors of the series connection of the transistors 43, 44 may be omitted.

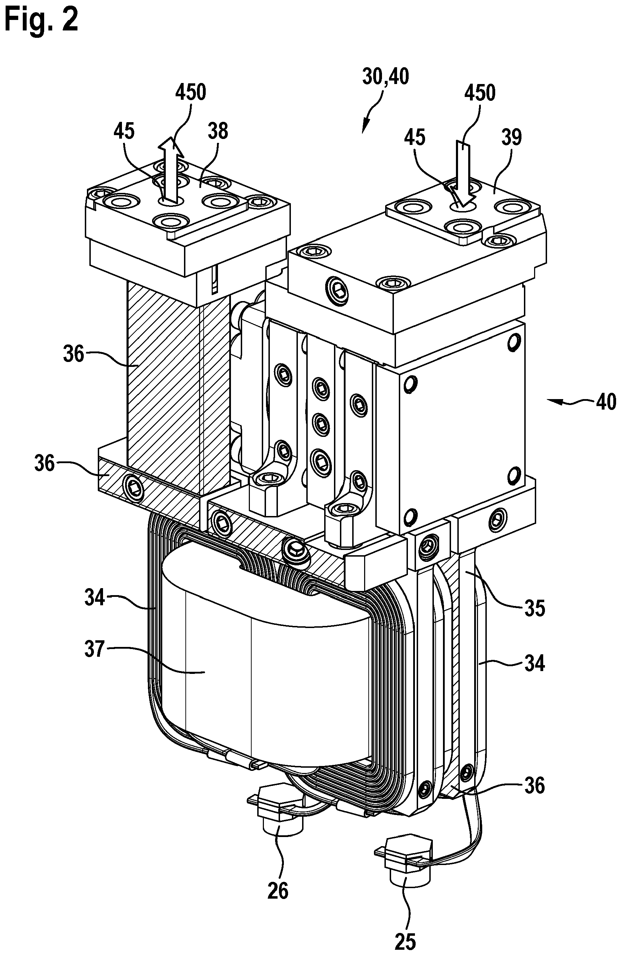

Fig. 2 shows a specific example for building up a transformer-rectifier unit 30, 40 according to the first embodiment. The transformer 30 comprises a primary winding 34, a secondary winding 35, a coating 36, a core 37, a first connecting block 38 and a second connecting block 39. The core 37 is made from a soft-ferromagnetic or soft-ferrite material. The core 37 is can be made from iron, in particular from silicon-alloyed-iron. The coating 36 is illustrated as hachure.

The secondary winding 35 and the rectifier 40 may comprise a cooling channel 45 through which a coolant 450 may flow from an inlet to an outlet, as schematically shown in Fig. 2. The inlet is indicated by an arrow for the coolant 450 flowing into the channel 45. The outlet is indicated by an arrow for the coolant 450 flowing out of the channel 45. The coolant 450 may be water or oil or gas or any other suitable coolant.

The primary winding 34 is mounted to connectors 25, 26 for connecting the transformer 30, in particular the primary side of the transformer 30, to an electric power supply. The primary winding 34 may be made from a strap-like wire which is paint by synthetic resin. The primary winding 34 and the secondary winding 35 are wound around the core 37. The primary winding 34 has more windings than the secondary winding 35. Therewith, the electric current on the primary side of the transformer 30 is transformed to an electric current on the secondary side of the transformer 30 which has a higher electric current value than the electric current on the primary side.

The secondary winding 35 of the transformer 30 is mounted to the rectifier 40. Herein, the cooling channel 45 may have parts in the rectifier 40. Further, the secondary winding 35 is mounted to the first connecting block 38. The first connecting block 38 is configured to mount the rectifier 40 to the welding tool 10 of Fig. 1, in particular a robot. The first connecting block 38 and the secondary winding 35 are at least partly coated by the coating 36. The second connecting block 39 is mounted to the rectifier 40. The second connecting block 39 is configured to mount the rectifier 40 to the welding tool 10 of Fig. 1. For example, the first connecting block 38 is used for connecting the transformer-rectifier unit 30, 40 to the negative electrode of the welding tool 10, whereas the second connecting block 39 is used for connecting the transformer-rectifier unit 30, 40 to the positive electrode of the welding tool 10.

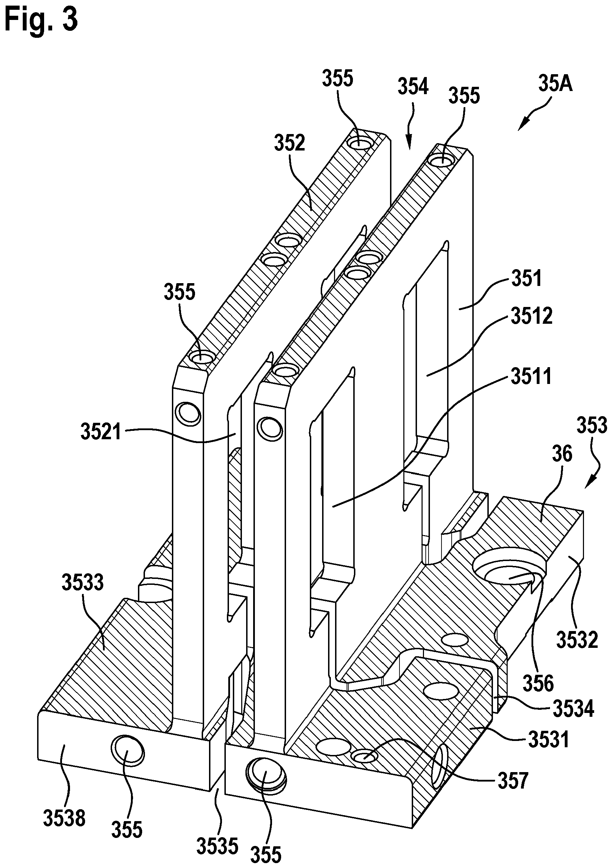

Fig. 3 shows a winding module 35A for the secondary winding 35 of the welding transformer 30 of Fig. 2. Basically, the winding module 35A has a T-cross-section. The winding module 35A builds a T with a double vertical stem. The winding module 35A may be made from an extruded profile. Alternatively, the winding module 35A may be a cast piece or made by another production method.

The winding module 35A may be constructed integrally, that is, the winding module 35A may be made from one piece of metal, in particular copper or aluminium. However, the winding module 35A may be constructed from more than one piece of metal. That is, instead of a monobloc construction, the winding module 35A may comprise at least two plates, which are connected to each other. Instead of metal, the winding module 35A may be made from another material which enables electric conduction. Copper and aluminium are advantageous as regards their comparable small electric resistance and simultaneously high thermic conductivity.

Possibly, the module 35A is coated by the coating 36. The coating 36 may be provided only partly, as shown in Fig. 3 as hachure. The coating 36 may be performed in a step of coating after the profile 3500 is milled into the form shown in Fig. 3. The coating 36 may protect the module 35A against corrosion. For example, the coating 36 may be a coating for passivating the aluminium or an aluminium alloy. In particular, the coating 36 may be an anodization. Alternatively, the coating 36 may be a galvanic coating. Alternatively, the coating 36 may be a chemical coating of nickel. Alternatively, the coating 36 may be a cathodic dip coating. Alternatively, the coating 36 may be a plastic coating.

Alternatively or in addition, coolant 450 used in the cooling channel 45 of the module 35A may comprise a corrosion inhibitor.

The module 35A is designed such that it comprises a first winding element 351, a second winding element 352 and a base element 353. The base element 353 has several sections 3531, 3532, 3533, which are each connected with at least one of the winding elements 351, 352. The module 35A is divided by two grooves 3534, 3535 so that the sections 3531, 3532, 3533 are formed.

Fig. 3 shows a specific example for an outer contour 3538 of the base element 353. That is, the outer shape 3538 of the base element 353 in Fig. 3 has bevelled edges and is almost rectangular, except for a recess in the section 3532.

The first winding element 351 protrudes from the base element 353. The second winding element 352 protrudes from the base element 353. The first and second winding elements 351, 352 protrude from the same side of the base element 353. The first winding element 351 and the second winding element 352 are positioned in parallel to each other. The first winding element 351 and the second winding element 352 are positioned spaced from one another by a space 354. The first and second winding elements 351, 352 are positioned side by side. Basically, the first and second elements 351, 352 have identical shape or almost identical shape. The elements 351, 352, 353 each have a plate-like form.

The first winding element 351 has two windows 3511, 3512 as openings for mounting the core 37 shown in Fig. 2. The second winding element 352 has two windows 3521, 3522 as openings for mounting the core 37 shown in Fig. 2.

Each of the winding elements 351, 352 and the base element 353 comprises first holes 355 for building up the cooling channel 45 in the elements 351 to 353. The base element 353 comprises second holes 356 for mounting and fastening the module 35A to the other parts of the transformer-rectifier-unit 30, 40. Further, the base element 353 comprises third holes 357 for mounting and fastening the module 35A to the other parts of the transformer-rectifier-unit 30, 40. For the sake of a clear depiction, only some of the first holes 355, only one of the second holes 356 and only one of the third holes 357 is/are provided with a reference sign in Fig. 3.

The first winding element 351 basically has a rectangular shape. The first winding element 351 forms a frame around the two windows 3511, 3512. Each one of the windows 3511, 3512 basically has a rectangular shape. The second winding element 352 basically has a rectangular shape. The second winding element 352 forms a frame around the two windows 3521, 3522. Each one of the windows 3521, 3522 basically has a rectangular shape. The windows 3511, 3512 are spaced from each other in a direction transverse to the direction in which the first and second winding elements 351, 352 are positioned spaced to each other. The same is valid as regards the windows 3521, 3522. Thus, the windows 3511, 3521 of the first and second winding elements 351, 352 may be milled in one milling step. The same is valid as regards the openings 3512, 3522.

The primary winding 34 may be inserted into the module 35A of Fig. 3, as shown in Fig. 2. In particular, the primary winding 34 may be wound, and thus placed, beside the first winding element 351 and beside the second winding element 352 as well as in the space 354 between the first winding element 351 and the second winding element 352. And, the core 37 may be inserted into the windows 3511, 3512, 3521, 3522 of the first and second winding elements 351, 352. Thus, at least a part of the core 37 is accommodated in each one of the windows 3511, 3512, 3521, 3522.

At least one of the windows 3511, 3512, 3521, 3522 may be produced by milling. At least one of the holes 355, 356, 357 may be produced by milling. At least one of the grooves 3534, 3535 may be produced by milling. It is possible that at least one other technology, like water-cutting or laser-cutting and/or welding is used to form the module 35A as shown in Fig. 3.

The holes 355 are blind holes and/or through holes which are connected with each other in the elements 351, 352, 353 to form the cooling channel 45 in the winding elements 351, 352 and the base element 353B. Instead, the holes 356, 357 are each through holes. The second holes 356 are additionally provided with a thread, as shown by two concentric rings in Fig. 3. Thus, the second holes 356 are prepared as threaded holes 356.

The groove 3534 separates the sections 3531, 3532. The groove 3535 separates the sections 3532, 3533. Thus, all of the sections 3531, 3532, 3533 are positioned spaced from one another, namely by one of the grooves 3534, 3535. Each one of the grooves 3534, 3535 is winding between the corresponding sections 3531, 3532, 3533. All of the sections 3531, 3532, 3533 of the base element 353 differ in shape and form. Herein, the outer contour of all of the sections 3531, 3532, 3533 of the base element 353B differ in shape. In other words, the sections 3531, 3532, 3533 have varied shape and form.

The first section 3531 is connected with the first winding element 351, only. That is, the first section 3531 is not connected with the second winding element 352. The second section 3532 is connected with the first and second winding elements 351, 352. The third section 3533 is connected with the second winding element 352, only. That is, the third section 3533 is not connected with the first winding element 351. As regards an intermediate frequency direct current transformer (MF-DC transformer) as the transformer 30, the third section 3533 may constitute a first positive conductive part of the MF-DC transformer, the first section 3531 may constitute a second positive conductive part of the MF-DC transformer, and the second section 3532 may constitute the negative conductive part of the MF-DC transformer.

The shape 3538 may be milled in a next step following at least one of the steps of milling described-above. For this purpose, the milling tool mills recesses into the base element 353B as needed.

In case the winding module 35A is built by at least two parts, the parts may be formed into the shape as shown in Fig. 3. Thereafter, the at least two parts may be joint to build the winding module 35A as shown in Fig. 3.

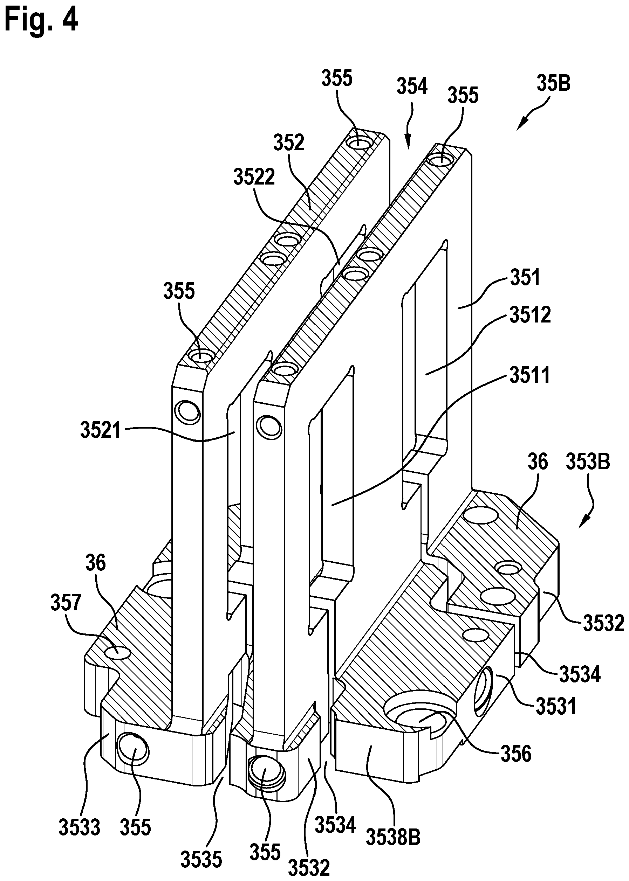

Fig. 4 shows another example of a winding module 35B. In a second embodiment, the winding module 35B may be used for the secondary winding 35 of a transformer-rectifier unit 30, 40. The winding module 35B is configured like the winding module 35A shown in Fig. 3 except for the base element 353B, in particular the outer shape 3538B of the base element 353B and the positions of the holes 356, 357.

That is, also the section 3533 of the module 35B has a recess in the outer shape 3538B. Further, the outer edge of the section 3532 is inclined to build an angular rim. In addition, the position of the holes 356, 357 in the sections 3531, 3532, 3533 is adapted to the configuration of another transformer-rectifier unit which may differ from the configuration of the transformer-rectifier unit 30, 40 shown in Fig. 2.

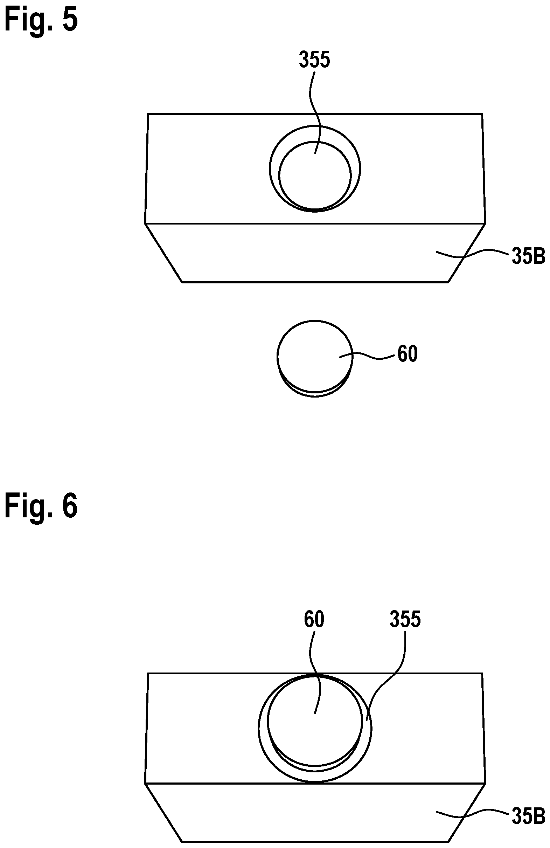

At least one of the holes 355 of the cooling channel 45 of the module 35B shown in Fig. 4 may be sealed by performing a method as explained below by reference to Figs. 5 to 10.

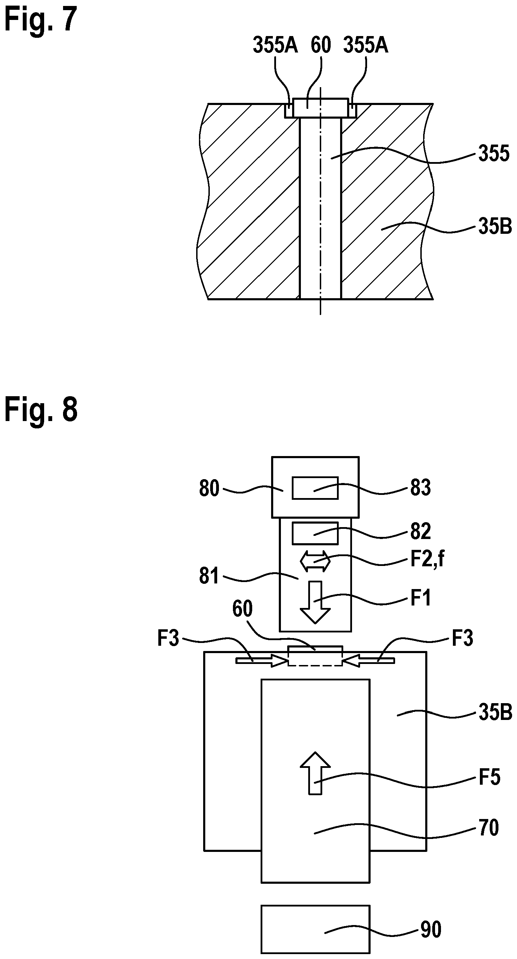

According to Fig. 5, a plug 60 may be prepared and/or provided to seal a hole 355 of the module 35B, which is shown in Fig. 5 only partly. For this purpose, the plug 60 is positioned at least partly into the hole 355. This is illustrated in Fig. 6 in a three-dimensional view of a part of the module 35B and in Fig. 7 in a cross section of the part of the module 35A. The plug 60 may be handled by a robot (not shown) for positioning the plug 60 at least partly into the hole 355. As shown in Fig. 6 and Fig. 7 the plug 60 has smaller dimensions than the hole 355. As a result, there is a movement space 355A, in which the plug 60 may move transvers to the hole 355 when the device 80 is used to set the plug 60 into the hole 355.

The plug 60 has the same material like the module 35B. The material of the plug 60 may be metal, in particular copper or aluminium. The plug 60 has a rectangular shape. The plug 60 has a shape of a cylinder plate or disc. Thus, the shape of the plug 60 for sealing a hole 355 has a comparably and remarkably less complex shape than a conventional plug.

Before or after the steps illustrated by Figs. 5 to 7, the module 35B is positioned in a holder 70, as shown in Fig. 8. The holder 70 is configured to hold, in particular grip, the module 35B. Thereafter, a sealing device 80 is used to seal the hole 355 with the plug 60. Herein, the plug 60 is welded into the hole 355. The holder 70 is adapted to the shape of the module 35B or the shape of at least one part of the module 35B. Herein, the holder 70 may be fastened to the frame of at least one of the windows 3511, 3512, 3521, 3522. The sealing device 80 and/or the holder 70 are configured to position the sealing device 80 and the module 35B relative to each other. The sealing device 80 may be moved by a moving device 90, in particular a robot, around the module 35B held by the holder 70. Additionally or alternatively, the holder 70 holding the module 35B is moved by the moving device 90, in particular a robot, to position the module 35B relative to the sealing device 80 to seal one of the holes 355 with a plug 60.

As shown in Fig. 8, the sealing device 80 comprises an anvil 81. The anvil 81 is movable transitionally in the direction of the axis of the anvil 81. The anvil 81 is movable transitionally relative to the plug 60. The anvil 81 has a face for contacting the plug 60. The face for contacting the plug 60 has greater dimensions than the dimensions of a surface of the plug 60 which is faced to the anvil 81. In addition, the sealing device 80 comprises a sonotrode 82, a detecting unit 83 and a control unit 84.

The sonotrode 82 is configured to exert an ultrasonic force F2 onto the plug 60. The detecting unit 83 is configured to detect the value of the forces F1, F2. The control unit 84 is configured to control the operation of the anvil 81 and/or the operation of the sonotrode 81 and/or the operation of the detecting unit 83. Therewith, the control unit 84 can control the method of setting a plug 60 in a hole 355 of a channel 45 (Fig. 3 or Fig. 4) to seal the cooling channel 45 and/or the module 35B to the outside. In this method, the control unit 84 can use at least one detecting result transmitted by the detecting unit 83.

For welding the plug 60 to the hole 355, the anvil 81 is moved towards the plug 60 to exert a pressure force F1 onto the plug 60. Additionally, the sonotrode 82 is activated to irradiate at least one ultrasonic frequency f. The at least one ultrasonic frequency f may be a sinusoidal frequency in the range of 20 kHz to 500 MHz, in particular a frequency in the range of 20 kHz to 100 MHz. Due to the at least one ultrasonic frequency f, the anvil 81 and the plug 60 vibrate with ultrasonic frequency f so that the plug 60 moves relative to the hole 355. The vibrations are locally applied to the plug 60 which is held under pressure between the anvil 81 and the module 35B to create a solid-state weld. Herein, the holder 70 holds the module 35B such that the module 35B is not moved relative to the holder 70, when the forces F1, F2 and a friction force F3 between the plug 60 and the hole 355 are applied. The holder 70 may be configured to exert a force F5 which counteracts the forces F1, F2.

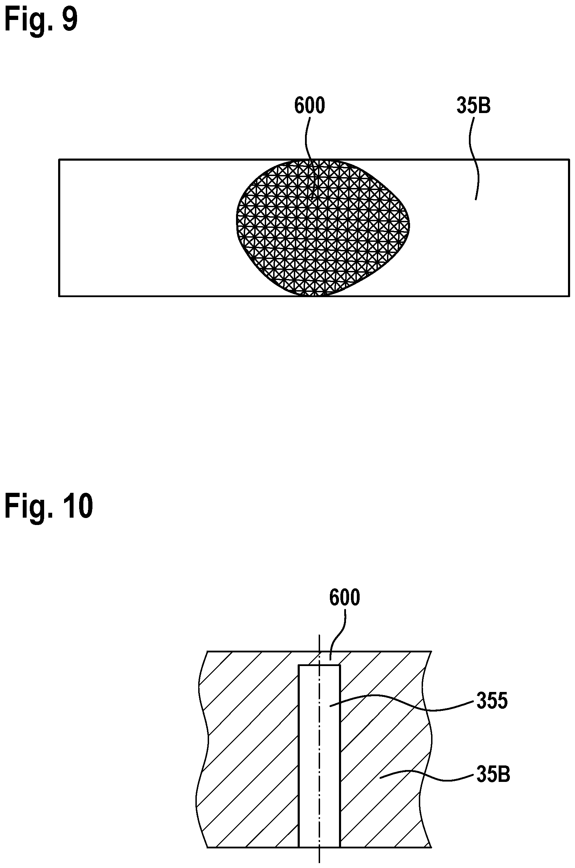

The movement of the plug 60 causes the friction force F3 effective between the hole 355 and the plug 60. As a result, the contact surfaces present between the plug 60 and the hole 355 join. Therewith, the material of the plug 60 and the material of the module 35B at the hole 355 is joint. The corresponding weld or welding joint 600 is shown in Fig. 9.

The described solid-state welding produces coalescence of the faying or contacting surfaces of the plug 60 and the hole 355 at a temperature below the melting point of the material of the plug 60 and the material around the hole 355. Thus, the material of the plug 60 and the material around the hole 355 can be joined without the addition of another material, like for example brazing or soldering filler material. Because solid-state welding does not melt the material of the plug 60 and the material around the hole 355, which would be the case between 460°C to 530°C for copper, the effect of cuprous oxide does not occur.

In the ultrasonic welding performed by the device 80, a pressure force F1 is applied to and/or between the plug 60 and the hole of the module 35B and an oscillating motion caused by at least one ultrasonic frequency f is used in a direction parallel to the contacting surfaces, as shown in Fig. 8. The pressure force F1 may be comparably small, and thus moderate, due to the additional force F2 exerted by the vibration or oscillating motion caused by at least one ultrasonic frequency f.

To achieve a constant friction force F3, the detecting unit 83 may detect the thermal energy applied to the weld and/or the plug 60. The detected energy may be used to control the above-described method. The welding operation of the device 80 is stopped when the detected thermal energy reaches a target value for the thermal energy. In addition, the detecting unit 83 may detect the position and/or the velocity of the plug 60 and/or the module 35B and/or the holder 70. The detecting unit 83 may transmit the result(s) to the control unit 84. However, it is possible that the velocity of the plug 60 and/or the module 35B and/or the holder 70 are/is set as a predefined parameter which is not controlled in a feedback loop by the control unit 84.

The surface of the welding joint 600 may be a serrated surface, as illustrated in Fig. 9 in a top view of the module 35B. The serrated surface is formed corresponding to the contact surface of the anvil 81. In case it is needed, the surface of the welding joint 600 may be smoothed to adjust the texture of the surface of the welding joint 600 to the texture of the surface of the module 35B. Such a smoothing or adjustment of the texture of the surface of the welding joint 600 might not be required, when the surface of the welding joint 600 and/or the surface of the transformer surrounding the welding joint 600 is not visible.

Thus, in operation, the sealing device 80 welds the plug 60 into the hole 355 by the use of the friction force F3 caused by the forces F1, F2. Preferably, the friction force F3 is positioned orthogonally to the pressure force F1. Preferably, the friction force F3 is positioned orthogonally to the force F2. Such a positioning of the forces F1 to F3 causes a very fast and robust joint of the materials of the plug 60 and the module 35B.

The sealing device 80, in particular the control unit 83, is configured to protocol the quality of each joint 600. The protocol contains detecting results detected by the detecting unit 83 and related to the method performed to produce the joint 600. The protocol may contain details, whether or not the joint 600 fulfils a predetermined quality standard. This is very advantageous for a proof as regards liability issues.

The sealing device 80 may produce the joints 600 much faster than by soldering. In addition, producing the joints 600 requires less cost than performing soldering instead. In addition, the quality of the joints 600 does not depend on the workers skill, since the method may be performed completely by the sealing device 80. The worker does not need to know details about the method performed by the sealing device 80. The worker only has to be trained to use the sealing device 80.

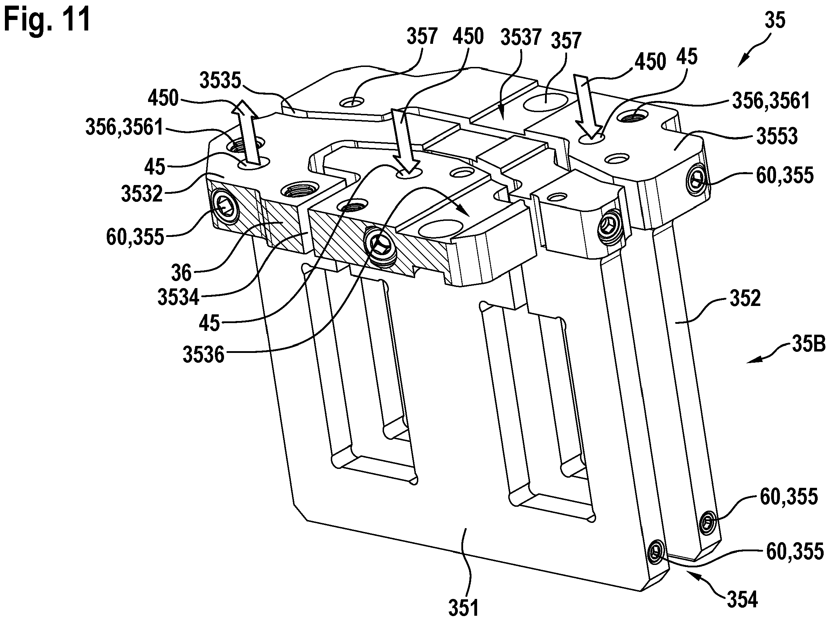

Fig. 11 shows the resulting winding 35, in which all of the holes 355 are sealed by a plug 60 to the outside for building the cooling channel 45. The module 35B is thus provided by a plurality of plugs 60 to seal the cooling channel 45 of the module 35B to the outside of the module 35B.

For example, as shown in Fig. 11, the cooling channel 45 formed in the module 35B has two inlets, namely one in the first section 3531 of the base element 353B and one in the third section 3533 of the base element 353B, but only one outlet in the second section 3532 of the base element 353B. Thus, the coolant 450 can be guided from the rectifier 40 through the cooling channel 45 and back to the rectifier 40, wherein the cooling channel 45 is built by the holes 355 in the module 35B, wherein the holes 355 are sealed to the outside of the elements 351 to 353 by the plugs 60, where needed.

Thus, the welding joint 600 of the sealed holes 355 is configured to withstand the required pressure applied in a leakage test of the module 35B and/or the cooling channel 45. Such a pressure is in particular a pressure of up to 12 bar, that is 12 * 100 kPa. Thus, the welding joint 600 and/or the holes 355 sealed with a plug 60, respectively, as described above, contribute that the module 35B and/or the cooling channel 45 can withstand the required pressure, in particular a pressure of up to 12 bar, that is 12 * 100 kPa, so that no leakage of cooling media 450 occurs.

Further in Fig. 11, the module 35B is provided by a plurality of thread inserts 3561. Each thread insert 3561 is thread in one of the second holes 356. Therewith, the second holes 356 are prepared for mounting the module 35B to the other parts of the transformer-rectifier-unit 30, 40 shown in Fig. 2 and as described above. The third holes 357 may be used without inserts to mount the module 35B to the other parts of the transformer-rectifier-unit 30, 40.

Further in Fig. 11, recesses 3536, 3567 present in the bottom side of the base element 353B, for example by milling. The recess 3536 is provided in the bottom side of the first and second sections 3531, 3532 of the base element 353B. The recess 3537 is provided in the bottom side of the second and third sections 3532, 3533 of the base element 353B. Each recess 3536, 3567 is positioned transverse to each one of the grooves 3534, 3535 which the recess 3536, 3567 crosses.

The, recesses 3536, 3567 may be milled after or before the grooves 3534, 3535 are milled.

Likewise, the module 35A of Fig. 3 may be produced as explained above by reference to Fig. 3 and Figs. 5 to 10, except that the several sections 3531, 3532, 3533 and the outer contour 3538 of the base element 353 are formed for the module 35A, as shown in Fig. 3. Then, the steps illustrated in Fig. 11 may be performed for the module 35A of Fig. 3 to build the winding 35, as shown in Fig. 2.

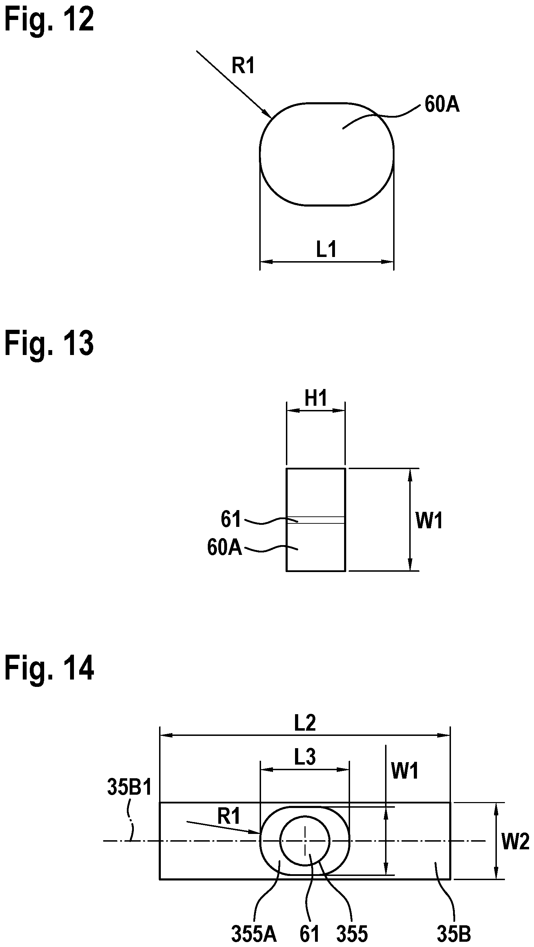

Fig. 12 and Fig. 13 show a plug 60A which may be used instead of the plug 60 shown in Figs. 5 to 11 to seal a hole 355 of the module 60A. As seen from the top, the plug 60A has an oval shape. The oval shape has a length L1 and an arc radius R1, as shown in Fig. 12. As shown in a side view of the plug 60A in Fig. 13, the plug 60A has a width W1, a height H1 and a symmetry axis 61. The length L1 is smaller than the length L3 of the movement space 355A of the hole 355 shown in Fig. 14.

As further shown in Fig. 14, the length L3 of the movement space 355A of the hole 355, and thus also the length L1 of the plug 60A, is smaller than the length L2 of the part of the module 35B in which the plug 60A is set and then welded. However, the length L3 of the movement space 355A of the hole 355, and thus also the length L1 of the plug 60A, is greater than the width W2 of the module 35B. And, the length L3 of the movement space 355A of the hole 355, and thus also the length L1 of the plug 60A, is greater than the diameter of the hole 355.

The width W1 of the plug 60A is greater than the diameter of the hole 355. However, the width W1 of the plug 60A is smaller than the width W2 of the module 35B.

As also shown in Fig. 14, the plug 60A is positioned such that it does not protrude from the module 35B. The axis of the hole 355 is positioned transverse, in particular orthogonally, to the axis 35B1 of the module 35B. The symmetry axis 61 of the plug 60A is positioned to coincide with the axis 35B1 of the module 35B.

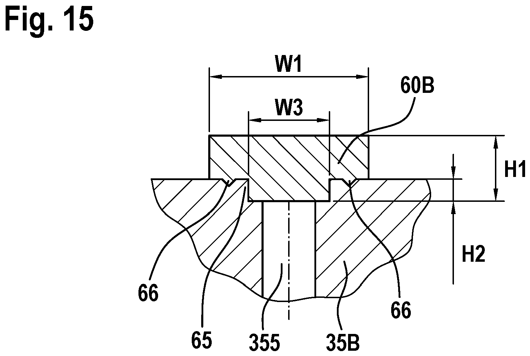

Instead of the plug 60A of Figs. 12 to 14 or the plug 60 shown in Figs. 5 to 11, a plug 60B of Fig. 15 may be used to seal a hole 355 of the module 35B. According to Fig. 15, the plug 60B has a shoulder 65 and a nipple 66. The plug 60B basically has a T-form. The nipple 66 protrudes from the shoulder 65, in a direction which is particular in parallel to the stem of the T-form. The nipple 66 protrudes from the shoulder 65 so that the nipple 66 projects in the direction of the module 35A, as shown in Fig. 15. When using the device 80 for setting the plug 60B into the hole 355, the nipple 66 scratches into the surface of the module 35B around the hole 355. The nipple 66 increases the friction force F3 shown in Fig. 8. The nipple 66 may have a pin shape or conical shape, as shown in Fig. 15. However, the nipple 66 may have another shape as long as this shape has the function of increasing the friction force F3.

The shoulder 65 has a height H2. The plug 60B has at its first end the width W1. At its second end, the plug 60B has the width W3. The second end is to be faced to the hole 355. For sealing the hole 355 with the plug 60B, the plug 60B is inserted into the hole 355 so that the shoulder 65 is positioned in the hole 355, whereas the first end of the plug 60B may protrude from the hole 355. The material of the shoulder 65 is thus welded at the hole 355 with the material of the module 35B. The shoulder 65 secures a still more robust connection between the plug 60B and the module 35B than the plug 60 or the plug 60A.

It is further conceivable that the plug 60B has more than one shoulder 65. In addition, the plug 60B may be serrated in a region corresponding to the shoulder 65. However, a cone shape is not advantageous, since the tool force is not perpendicular to the welding surface.

Alternatively to the shapes shown in Figs. 12 to 15, at least one of the plugs 60A, 60B may be modified to have a rectangular or quadratic cross section or a cubical shape or any other shape suitable to achieve the sealing of the cooling channel 45 and/or the module 35B as described above.

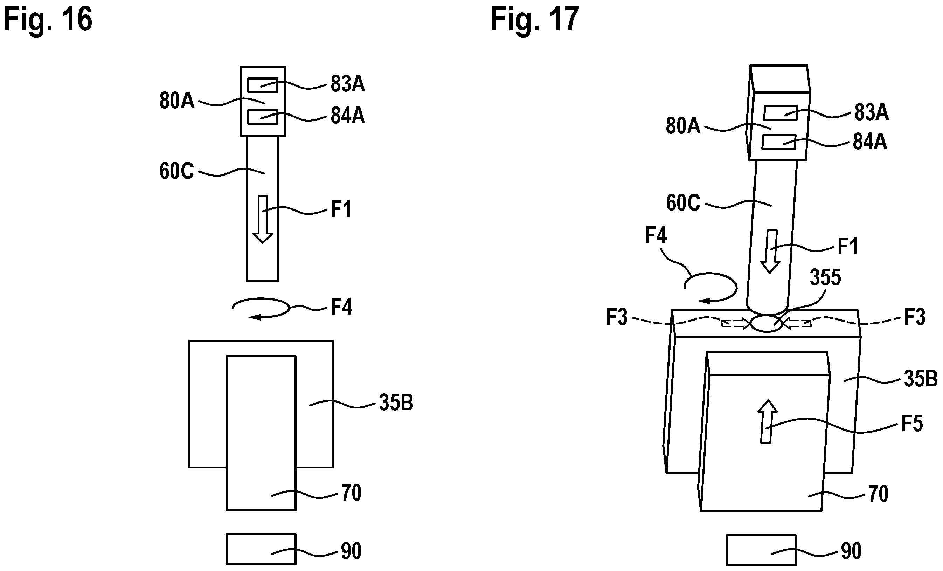

Figs. 16 to 19 show a sealing device 80A for performing a method for sealing a hole 355 as regards a third embodiment. The method may be performed for sealing at least one of the holes 355 of the cooling channel 45 of the module 35A shown in Fig. 3. Alternatively, at least one of the holes 355 of the cooling channel 45 of the module 35B shown in Fig. 4 may be sealed by performing the method as explained below by reference to Figs. 16 to 19. In the following, a module 35B is used as an example.

Similar to the sealing device 80 of Fig. 5, the sealing device 80A comprises a detecting unit 83A and a control unit 84A. The sealing device 80A of Figs. 16 and 17 is configured to perform rotation friction plug welding to seal a hole 355 of the module 35B. The sealing device 80A is configured to accommodate a plug 60C. The sealing device 80A is further configured to transitionally move the plug 60C along its axis. The sealing device 80A is further configured to rotate the plug 60C around its axis, as illustrated by the arrow marked with F4.

The plug 60C is an elongated plug having a length such that the sealing device 80A can clamp the plug 60C for accommodating the plug 60C. The plug 60C has a cylindrical shape. The plug 60C is made from the same material like the module 35B.

For performing a solid-state joining method to set the plug 60C into the hole 355, the sealing device 80A moves the plug 60C to exert a compressive force or pressure force F1 onto the plug 60C, as shown in Figs. 16 and 17. In addition, the sealing device 80A rotates the plug 60C around its axis, as shown by the rotation force F4. The detecting unit 83A is configured to detect the value of the forces F1, F4 and/or physical entities related thereto. For example, when the plug 60C is set into the hole 355, the force F1 acts as a friction force between the plug 60C and the material surrounding the hole 355. The friction force F1 is detected by the detecting unit 83A. The detecting result is used in a feedback loop performed by the control unit 84A. The rotation force F4 is caused by the rotational velocity of the plug 60C. The rotational velocity is regulated to achieve a constant force F1 in setting the plug 60 into the hole 355.

The control unit 84A is configured to control the movement and/or clamping and/or rotation of the plug 60C and/or the operation of the detecting unit 83A. The control unit 84A can control the method of setting a plug 60C in a hole 355 of a channel 45 (Fig. 3 or Fig. 4) to seal the cooling channel 45 and/or the module 35B to the outside. In this method, the control unit 84A can use at least one detecting result transmitted by the detecting unit 83A.

Due to the forces F1, F4, the plug 60C moves relative to the hole 355. The movement of the plug 60C causes a friction force F3 effective between the surfaces of the hole 355 and the plug 60C, as already described with above. The friction force F3 is illustrated in Fig. 17 very simplified, since the friction force F3 effectively acts along the direction of rotation of the plug 60C. Also the friction force F3 is detected by the detecting unit 83A. The detecting result may be used in a feedback loop performed by the control unit 84A.

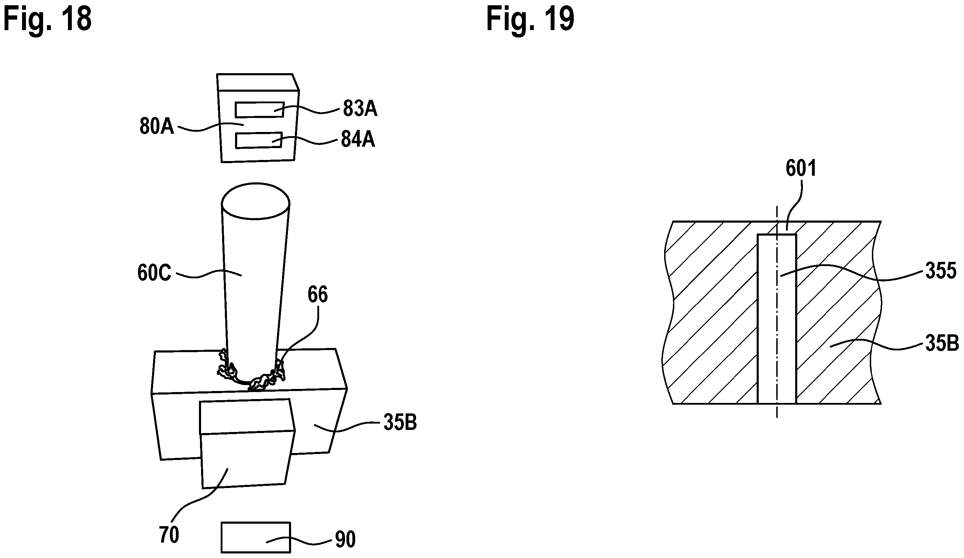

As a result, the contact surfaces present between the plug 60C and the hole 355 join in solid state. Therewith, the material of the plug 60C and the material around the hole 355 is fixed to each other. Thus, one end of the plug 60C is connected with the hole 355, as shown in Fig. 18. Copper scrap 66 produced by the above-described solid-state joining, is present on the surface of the module 35B. The copper scrap 66 is to be removed.

Coalescence is achieved by the heat of friction between the two surfaces. The described solid-state welding produces coalescence of the faying or contacting surfaces of the plug 60 and the hole 355 at a temperature below the melting point of the material of the plug 60 and the material around the hole 355, as described above by reference to Fig. 8. Thus, the material of the plug 60 and the material around the hole 355 can be joined without the addition of brazing or soldering filler material. And, the effect of cuprous oxide does not occur.

Additionally, the plug 60C is cut from the module 35B, so that the corresponding welding joint 601 and its surface is formed, as shown in Fig. 19. The surface of the joint 601 may be smoothed to adjust the texture of the surface of the joint 601 to the texture of the surface of the module 35B.

Preferably, the plug 60C and the hole 355 in the module 35B are positioned relative to each other so that the friction force F3 is positioned orthogonally to the pressure force F1, as already described by reference to Fig. 8.

The sealing device 80A provides the same advantages as mentioned for the sealing device 80. However, the sealing device 80A is more expensive than the sealing device 80 even if no protocol can be provided as regards the sealing method performed for each joint 601 and the resulting quality. In addition, the produced copper scrap 66 has to be removed from the surface of the module 35B. And, smoothing the surface of the joint 601 to adjust the texture of the surface of the joint 601 to the texture of the surface of the module 35B is more intricate than for the joint 600.

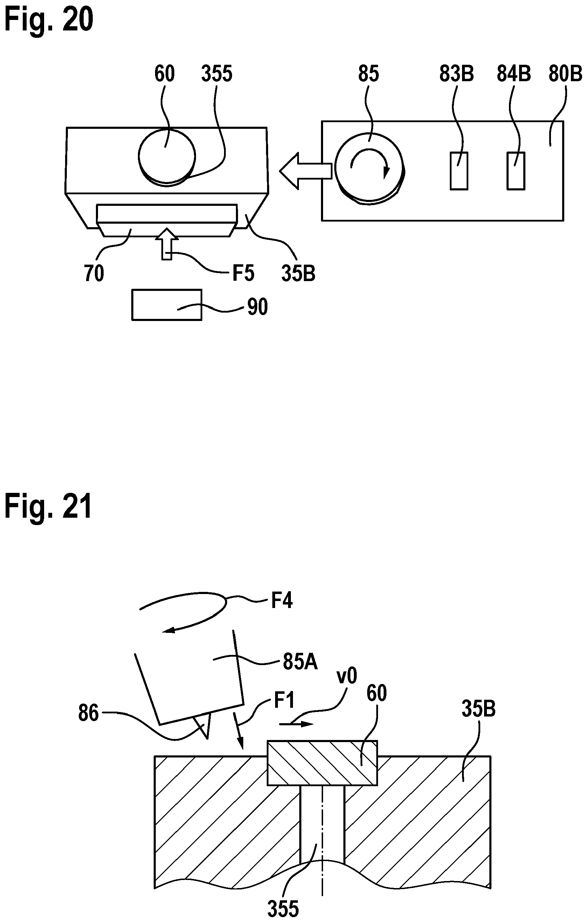

As shown in Fig. 20, a sealing device 80B according to a fourth embodiment is configured to perform friction welding, in particular friction stir welding. Herein, the sealing device 80B comprises a detecting unit 83B, a control unit 84B and a tool 85. The module 35B is held by the holder 70, as detailed with regard to Figs. 8. Alternatively, a tool 85A having a pin 86 may be used, as shown in Fig. 21 in a cross section and described later.

For performing friction welding with the tool 85, the tool 85 according to Fig. 20 is rotated and traversed relative to a plug 60 set in the hole 355 of a part of module 35B. The movement of the tool 85 is shown in Fig. 20 by arrows. For coalescence, the tool 85 is controlled by the control unit 84B to exert mechanical pressure on the plug 60 and the material of the module 35B around the hole 355. Therewith, the material of the plug 60 and the material of the module 35B around the hole 355 is warmed up and softened due to the mechanical pressure of the tool 85. Thus, the tool 85 mechanically intermixes the material of the plug 60 and the material of the module 35B around the hole 355. While the tool 85 is traversed along a joint line for joining the materials, the tool 85 mechanically intermixes the two pieces of metal of the plug 60 and the module 35B, and forges the hot and softened metal by the mechanical pressure.

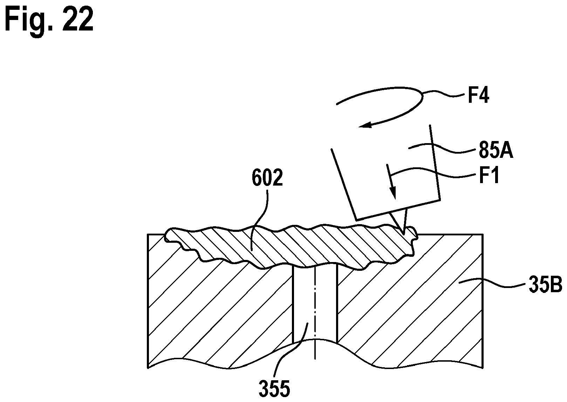

Thus, a welding joint 602 of Fig. 22 similar to the welding joint 601 shown in Fig.19 is formed in solid state. The surface of the welding joint 602 of Fig. 22 is serrated.

For performing the control, the control unit 84B may use at least one detecting result of the detecting unit 83B regarding the movement of the tool 85. The detecting unit 83A may detect the position and/or the velocity of at least one of the tool 85 and/or the plug 60 and/or the module 35B and/or the holder 70. The detecting unit 83A may transmit the result(s) to the control unit 84 for achieving the constant mechanical pressure.

In the mentioned modification of the tool 85, the tool 85A of Fig. 21 has a pin 86 for performing friction stir welding. The pin 86 protrudes in the direction of the rotation axis of the tool 85. In friction stir welding illustrated by Fig. 21 and Fig. 22, the pin 86 contacts the surface of the plug 60. Thus, due to the contacting pin 86, the contact surface between the tool 85A and the plug 60 is smaller than when performing friction welding with the tool 85. In addition, it is required to weld the recess in the welding joint 602, which the pin 86 leaves in the welding joint 602. Thus, like rotation friction welding, in which cutting the excess plug 60C is to be performed, friction (stir) welding requires additional processing after welding.

The friction (stir) welding has the same advantages as the rotation friction welding.However, like rotation friction welding, friction (stir) welding is more complex and slower than ultrasonic welding. In addition, the additional processing after welding required for rotation friction welding or friction (stir) welding is more intricate than for ultrasonic welding, since the texture of the surface of the welding joint 600 illustrated in Fig. 9 requires a comparably minimal additional processing.

All of the above-described implementations of the plant 1, the device 2, the transformer 30, the transformer-rectifier-unit 30, 40, the winding 35, the modules 35A, 35B, the devices 80, 80A, 80B and the above-described methods can be used separately or in all possible combinations thereof. The features of the first and second embodiments and/or their modifications can be combined arbitrarily. Moreover, in particular, the following modifications are conceivable.

The elements shown in the figures are depicted schematically and can differ in the specific implementations from the forms shown in the figures provided that the above-described functions are ensured.

The shape of the elements 351, 352, 353, especially the outer contour 3538 of the base elements 353, 353B, may be adapted to the specific requirements of the welding device 2.

Additionally or alternatively, the dimensions of the elements 351, 352, 353 may be adapted to the specific requirements of the welding device 2. That is, the thickness of the plate-like shape used for the elements 351, 352, 353 may differ from the thickness of the plate-like shape of the elements 351, 352, 353 shown in the drawings.

In case the transformer 30 has two cores 37, the first and second winding elements 351, 352 may each have only one window 3511, 3521. Each one of the two cores 37 may thus be mounted through the windows 3511, 3521 and around one side of the frames of the winding elements 351, 352. The transformer 30 may have more than two cores, so that each one of the winding elements 351, 352 may have more than two windows 3511, 3512.

Additionally or alternatively, the number and/or the position and/or the shape of the holes 355 to 357 in the elements 351, 352, 353 may be adapted to the specific requirements of the welding device 2 and thus differ from the specific examples shown in Figs. 2 to 11. In particular, at least one of the holes 355 to 357 may be a long hole instead of the round holes 355 to 357 shown in the figures of the drawing.

## Claims

1. A method for producing a cooling channel in a winding (35) for a welding transformer (30), the method comprising the steps of
holding, by a holder (70), a winding module (35A; 35B) which comprises a first winding element (351), a second winding element (352) and a base element (353; 353B), wherein each one of the first and second winding elements (351; 352) protrudes from the base element (353; 353B) and wherein the first and second winding elements (351; 352) are positioned spaced to each other at the base element (353; 353B) so that the winding module (35A; 35B) has a t-cross-section, wherein the first winding element (351) comprises at least one window (3511; 3512) for accommodating a part of a core (37) of the welding transformer (30), wherein the second winding element (352) comprises at least one window (3521; 3522) for accommodating a part of the core (37) of the welding transformer (30), and wherein the base element (353; 353B) comprises grooves (3534, 3535) separating the base element (353; 353B) into sections (3531, 3532, 3533) such that at least one of the sections (3531, 3532, 3533) is connected to the first and second winding elements (351; 352) and such that at least one of the sections (3531, 3532, 3533) is connected to only one of the first and second winding elements (351; 352), and
sealing a plug (60; 60A, 60B, 60C) into a first hole (355) of the cooling channel (45), the cooling channel being provided in the first and second winding elements (351) as well as the base element (353; 353B) and being suitable for flowing a coolant (450) through the first and second winding elements (351; 352) as well as the base element (353; 353B), which first hole (355) is open to the outside of one of the elements (351, 352, 353), by controlling a movement of the plug (60; 60A, 60B, 60C) relative to the first hole (355) so that a solid-state welding joint (600; 601; 602) is produced by material of the plug (60; 60A, 60B, 60C) and material of the winding module (35A; 35B), in which the first hole (355) is positioned,
wherein the holder (70) holds the winding module (35A; 35B) such that a movement between the winding module (35A; 35B) and the holder (70) is prevented while the step of sealing is performed.

2. The method according to claim 1, wherein the solid-state welding joint (600; 601; 602) is produced by coalescence of contacting surfaces of the plug (60; 60A, 60B, 60C) and the first hole (355) below the melting point of the materials without supplying an additional joining material.

3. The method according to claim 1 or 2, wherein the solid-state welding joint (600; 601; 602) is produced by ultrasonic welding or rotation friction welding or friction welding.

4. The method according to any one of the claims 1 to 3, wherein the movement of the plug (60; 60A; 60B; 60C) relative to the first hole (355) is controlled so that the hole (355) sealed by the solid-state welding joint (600; 601; 602) withstands without leakage a pressure of up to 12 * 100 kPa which is exerted by cooling media (450).

5. The method according to any one of the claims 1 to 4, wherein the material of the plug (60; 60A; 60B; 60C) and the material, in which the first hole (355) is positioned, is the same.

6. The method according to any one of the claims 1 to 5,
wherein the plug (60B) has a shoulder (65) at the side of the plug (60B) which is inserted in the first hole (355) before the step of sealing is performed.

7. The method according to any one of the claims 1 to 6, further comprising at least one step of the steps of
milling the first holes (355) into the first and second winding elements (351, 352) as well as the base element (353; 353B) to form the cooling channel (45) in the winding module (35A; 35B), and
providing each first hole (355) with one solid-state welding joint (600; 601; 602) for sealing the cooling channel (45) to the outside of the winding module (35A; 35B), and
milling second holes (356) into the base element (353; 353B), and
providing at least one of the second holes (356) with an insert (3561) for connecting the winding module (35A; 35B) with other parts of a transformer-rectifier-unit (30, 40).

8. The method according to any one of the claims 1 to 7 being performed by a device (80; 80A; 80B) for producing the welding joint (600; 601; 602) in the cooling channel (45) for the winding (35) for the welding transformer (30), the device comprising
a control unit (84; 84A; 84B) to control a movement of the plug (60; 60A, 60B, 60C) in the first hole (355), and
a holder (70) for holding the winding module (35A; 35B) of the winding (35) when sealing the plug (60; 60A, 60B, 60C) into the first hole (355).

9. A winding (35) for a welding transformer (30), the winding (35) comprising a winding module (35A; 35B) which comprises
a first winding element (351) framing at least one window (3511; 3512) for accommodating a part of a core (37) of the welding transformer (30),
a second winding element (352) framing at least one window (3521; 3522) for accommodating a part of the core (37) of the welding transformer (30), and
a base element (353; 353B),
wherein each one of the first and second winding elements (351; 352) protrudes from the base element (353; 353B),
wherein the first and second winding elements (351; 352) are positioned spaced to each other at the base element (353; 353B) so that the winding module (35A; 35B) has a t-cross-section, and
wherein the base element (353; 353B) comprises grooves (3534, 3535) which separates the base element (353; 353B) into sections (3531, 3532, 3533), and
wherein at least one of the sections (3531, 3532, 3533) is connected to the first and second winding elements (351; 352), and
wherein at least one of the sections (3531, 3532, 3533) is connected to only one of the first and second winding elements (351; 352),
wherein the first and second winding elements (351) as well as the base element (353; 353B) comprise a cooling channel (45) for flowing a coolant (450) through the first and second winding elements (351; 352) as well as the base element (353; 353B), and
**characterized in that** a plug (60; 60A, 60B, 60C) is sealed in a first hole (355) of the cooling channel (45) as a solid-state welding joint (600; 601; 602) produced by the material of the plug (60; 60A, 60B, 60C) and the material, in which the first hole (355) is positioned.

10. The winding (35) according to claim 9,
wherein each one of the first and second winding elements (351; 352) comprises at least one first hole (355) to form the cooling channel (45), and
wherein at least one first hole (355) in the first and/or second winding elements (351; 352) is a blind hole and at least one first hole (355) in the first and/or second winding elements (351; 352) is a through hole so that the first holes (355) cross each other to form the cooling channel (45).

11. The winding (35) according to claim 9 or 10,
wherein the first winding element (351) forms a frame for two windows (3511; 3512),
wherein the windows (3511; 3512) of the first winding element (351) are spaced from each other in the first winding element (351),
wherein the second winding element (352) forms a frame for two windows (3521; 3522), and
wherein the windows (3521; 3522) of the second winding element (352) are spaced from each other in the second winding element (352).

12. The winding (35) according to any one of the claims 9 to 11, wherein the material of the winding module (35A; 35B) is metal, in particular copper or aluminium.

13. A welding transformer (30), comprising
a core (37),
a primary winding (34), and
a winding (35) according to any one of the claims 9 to 12,
wherein the winding (35) is positioned on the secondary side of the transformer (30), and
wherein the primary winding (34) is mounted to the core (37) and to the secondary winding (35).

14. A welding tool (10) for producing an article (4), comprising
a welding transformer (30) according to claim 13, and
a control unit (20) configured to adapt a welding current (I2) for forming the article (4) by joining at least two parts of one workpiece (5) and/or at least two workpieces (5; 6) by at least one welding joint (7).

15. A welding device (2), comprising
a welding tool (10) according to claim 14, and
a device (50) for moving the welding tool (10) according to a predetermined moving profile along the at least one workpiece (5; 5, 6),
wherein the article (4) is a vehicle body.

## Patentansprüche

1. Verfahren zum Herstellen eines Kühlkanals in einer Wicklung (35) für einen Schweißtransformator (30), wobei das Verfahren die folgenden Schritte umfasst:
Halten, durch einen Halter (70), eines Wicklungsmoduls (35A; 35B), das ein erstes Wicklungselement (351), ein zweites Wicklungselement (352) und ein Basiselement (353; 353B) umfasst, wobei jedes von dem ersten und dem zweiten Wicklungselement (351; 352) von dem Basiselement (353; 353B) vorsteht und wobei das erste und das zweite Wicklungselement (351; 352) voneinander beabstandet an dem Basiselement (353; 353B) positioniert sind, sodass das Wicklungsmodul (35A; 35B) einen T-Querschnitt aufweist, wobei das erste Wicklungselement (351) mindestens ein Fenster (3511; 3512) zum Aufnehmen eines Teils eines Kerns (37) des Schweißtransformators (30) umfasst, wobei das zweite Wicklungselement (352) mindestens ein Fenster (3521; 3522) zum Aufnehmen eines Teils des Kerns (37) des Schweißtransformators (30) umfasst und wobei das Basiselement (353; 353B) Schlitze (3534, 3535) umfasst, die das Basiselement (353; 353B) in Teilabschnitte (3531, 3532, 3533) unterteilen, sodass mindestens einer der Teilabschnitte (3531, 3532, 3533) mit dem ersten und dem zweiten Wicklungselement (351; 352) verbunden ist und sodass mindestens einer der Teilabschnitte (3531, 3532, 3533) mit nur einem von dem ersten und dem zweiten Wicklungselement (351; 352) verbunden ist, und
abdichtendes Einführen eines Stopfens (60; 60A, 60B, 60C) in ein erstes Loch (355) des Kühlkanals (45), wobei der Kühlkanal in dem ersten und dem zweiten Wicklungselement (351) sowie dem Basiselement (353; 353B) bereitgestellt und geeignet zum Fließenlassen eines Kühlmittels (450) durch das erste und das zweite Wicklungselement (351; 352) sowie das Basiselement (353; 353B) ist, wobei das erste Loch (355) zur Außenseite eines der Elemente (351, 352, 353) hin offen ist, indem eine Bewegung des Stopfens (60; 60A, 60B, 60C) relativ zu dem ersten Loch (355) gesteuert wird, sodass durch das Material des Stopfens (60; 60A, 60B, 60C) und das Material des Wicklungsmoduls (35A; 35B), in dem das erste Loch (355) positioniert ist, eine Festkörperschweißverbindung (600; 601; 602) erzeugt wird,
wobei der Halter (70) das Wicklungsmodul (35A; 35B) hält, sodass eine Bewegung zwischen dem Wicklungsmodul (35A; 35B) und dem Halter (70) verhindert wird, während der Schritt des abdichtenden Einführens durchgeführt wird.

2. Verfahren nach Anspruch 1, wobei die Festkörperschweißverbindung (600; 601; 602) durch eine Koaleszenz von Berührungsoberflächen des Stopfens (60; 60A, 60B, 60C) und des ersten Lochs (355) unter dem Schmelzpunkt der Materialien ohne die Zuführung eines zusätzlichen Fügewerkstoffs hergestellt wird.

3. Verfahren nach Anspruch 1 oder 2, wobei die Festkörperschweißverbindung (600; 601; 602) durch Ultraschallschweißen oder Rotationsreibschweißen oder Reibschweißen hergestellt wird.

4. Verfahren nach einem der Ansprüche 1 bis 3, wobei die Bewegung des Stopfens (60; 60A; 60B; 60C) relativ zu dem ersten Loch (355) gesteuert wird, sodass das durch die Festkörperschweißverbindung (600; 601; 602) abgedichtete Loch (355) einem Druck von bis zu 12 * 100 kPa, der von Kühlmedien (450) ausgeübt wird, ohne Leckage standhält.

5. Verfahren nach einem der Ansprüche 1 bis 4, wobei das Material des Stopfens (60; 60A; 60B; 60C) das gleiche ist wie das Material, in dem das erste Loch (355) positioniert ist.

6. Verfahren nach einem der Ansprüche 1 bis 5,
wobei der Stopfen (60B) eine Schulter (65) an der Seite des Stopfens (60B) aufweist, der in das erste Loch (355) eingesetzt wird, bevor der Schritt des abdichtenden Einführens durchgeführt wird.

7. Verfahren nach einem der Ansprüche 1 bis 6, das ferner mindestens einen Schritt der folgenden Schritte umfasst:
Fräsen der ersten Löcher (355) in das erste und das zweite Wicklungselement (351, 352) sowie das Basiselement (353; 353B), um den Kühlkanal (45) in dem Wicklungsmodul (35A; 35B) zu bilden, und
Versehen jedes ersten Lochs (355) mit einer Festkörperschweißverbindung (600; 601; 602) zum Abdichten des Kühlkanals (45) zu der Außenseite des Wicklungsmoduls (35A; 35B) hin und
Fräsen zweiter Löcher (356) in das Basiselement (353; 353B) und
Versehen mindestens eines der zweiten Löcher (356) mit einem Einsatz (3561) zum Verbinden des Wicklungsmoduls (35A; 35B) mit anderen Teilen einer Transformator-Gleichrichter-Einheit (30, 40).

8. Verfahren nach einem der Ansprüche 1 bis 7, das durch eine Vorrichtung (80; 80A; 80B) zum Herstellen der Schweißverbindung (600; 601; 602) in dem Kühlkanal (45) für die Wicklung (35) für den Schweißtransformator (30) durchgeführt wird, wobei die Vorrichtung Folgendes umfasst:
eine Steuereinheit (84; 84A; 84B) zum Steuern einer Bewegung des Stopfens (60; 60A, 60B, 60C) in dem ersten Loch (355) und
einen Halter (70) zum Halten des Wicklungsmoduls (35A; 35B) der Wicklung (35) beim abdichtenden Einführen des Stopfens (60; 60A, 60B, 60C) in das erste Loch (355).

9. Wicklung (35) für einen Schweißtransformator (30), wobei die Wicklung (35) ein Wicklungsmodul (35A; 35B) umfasst, das Folgendes umfasst:
ein erstes Wicklungselement (351), das mindestens ein Fenster (3511; 3512) zum Aufnehmen eines Teils eines Kerns (37) des Schweißtransformators (30) umrahmt,
ein zweites Wicklungselement (352), das mindestens ein Fenster (3521; 3522) zum Aufnehmen eines Teils des Kerns (37) des Schweißtransformators (30) umrahmt, und
ein Basiselement (353; 353B),
wobei jedes von dem ersten und dem zweiten Wicklungselement (351; 352) von dem Basiselement (353; 353B) vorsteht,
wobei das erste und das zweite Wicklungselement (351; 352) voneinander beabstandet an dem Basiselement (353; 353B) positioniert sind, sodass das Wicklungsmodul (35A; 35B) einen T-Querschnitt aufweist, und
wobei das Basiselement (353; 353B) Schlitze (3534, 3535) umfasst, die das Basiselement (353; 353B) in Teilabschnitte (3531, 3532, 3533) unterteilen,
wobei mindestens einer der Teilabschnitte (3531, 3532, 3533) mit dem ersten und dem zweiten Wicklungselement (351; 352) verbunden ist und
wobei mindestens einer der Teilabschnitte (3531, 3532, 3533) mit nur einem von dem ersten und dem zweiten Wicklungselement (351; 352) verbunden ist,
wobei das erste und das zweite Wicklungselement (351) sowie das Basiselement (353; 353B) einen Kühlkanal (45) zum Fließenlassen eines Kühlmittels (450) durch das erste und das zweite Wicklungselement (351; 352) sowie das Basiselement (353; 353B) umfassen, und
**dadurch gekennzeichnet, dass** ein Stopfen (60; 60A, 60B, 60C) in ein erstes Loch (355) des Kühlkanals (45) als eine Festkörperschweißverbindung (600; 601; 602) abdichtend eingeführt ist, die durch das Material des Stopfens (60; 60A, 60B, 60C) und das Material, in dem das erste Loch (355) positioniert ist, hergestellt wird.

10. Verfahren (35) nach Anspruch 9,
wobei jedes von dem ersten und dem zweiten Wicklungselement (351; 352) mindestens ein erstes Loch (355) zum Bilden des Kühlkanals (45) umfasst und
wobei mindestens ein erstes Loch (355) in dem ersten und/oder dem zweiten Wicklungselement (351; 352) ein Sackloch ist und mindestens ein erstes Loch (355) in dem ersten und/oder dem zweiten Wicklungselement (351; 352) ein Durchgangsloch ist, sodass die ersten Löcher (355) einander kreuzen, um den Kühlkanal (45) zu bilden.

11. Verfahren (35) nach Anspruch 9 oder 10,
wobei das erste Wicklungselement (351) einen Rahmen für zwei Fenster (3511; 3512) bildet,
wobei die Fenster (3511; 3512) des ersten Wicklungselements (351) in dem ersten Wicklungselement (351) voneinander beabstandet sind,
wobei das zweite Wicklungselement (352) einen Rahmen für zwei Fenster (3521; 3522) bildet und
wobei die Fenster (3521; 3522) des zweiten Wicklungselements (352) in dem zweiten Wicklungselement (352) voneinander beabstandet sind.

12. Wicklung (35) nach einem der Ansprüche 9 bis 11, wobei das Material des Wicklungsmoduls (35A; 35B) Metall, insbesondere Kupfer oder Aluminium ist.

13. Schweißtransformator (30), der Folgendes umfasst:
einen Kern (37),
eine Primärwicklung (34) und
eine Wicklung (35) nach einem der Ansprüche 9 bis 12,
wobei die Wicklung (35) auf der Sekundärseite des Transformators (30) positioniert ist und
wobei die Primärwicklung (34) an dem Kern (37) und an der Sekundärwicklung (35) angebracht ist.

14. Schweißwerkzeug (10) zum Herstellen eines Artikels (4), das Folgendes umfasst:
einen Schweißtransformator (30) nach Anspruch 13 und
eine Steuereinheit (20), die dazu ausgelegt ist, einen Schweißstrom (I2) zum Bilden des Artikels (4) durch Verbinden von mindestens zwei Teilen eines Werkstücks (5) und/oder mindestens zwei Werkstücken (5; 6) durch mindestens eine Schweißverbindung (7) anzupassen.

15. Schweißvorrichtung (2), die Folgendes umfasst:
ein Schweißwerkzeug (10) nach Anspruch 14 und
eine Vorrichtung (50) zum Bewegen des Schweißwerkzeugs (10) gemäß einem vorgegebenen Bewegungsprofil entlang des mindestens einen Werkstücks (5; 5, 6),
wobei der Artikel (4) eine Fahrzeugkarosserie ist.

## Revendications

1. Procédé de production d'un canal de refroidissement dans un enroulement (35) pour un transformateur de soudage (30), le procédé comprenant les étapes de
le support, par un support (70), d'un module d'enroulement (35A ; 35B) qui comprend un premier élément d'enroulement (351), un second élément d'enroulement (352), et un élément de base (353 ; 353B), dans lequel chacun des premier et second éléments d'enroulement (351 ; 352) fait saillie à partir de l'élément de base (353 ; 353B) et dans lequel les premier et second éléments d'enroulement (351 ; 352) sont positionnés de façon espacée l'un de l'autre sur l'élément de base (353 ; 353B) de telle sorte que le module d'enroulement (35A ; 35B) a une section transversale en t, dans lequel le premier élément d'enroulement (351) comprend au moins une fenêtre (3511 ; 3512) destinée à recevoir une partie d'un noyau (37) du transformateur de soudage (30), dans lequel le second élément d'enroulement (352) comprend au moins une fenêtre (3521 ; 3522) destinée à recevoir une partie du noyau (37) du transformateur de soudage (30), et dans lequel l'élément de base (353 ; 353B) comprend des rainures (3534, 3535) séparant l'élément de base (353 ; 353B) en sections (3531, 3532, 3533) de manière telle qu'au moins une des sections (3531, 3532, 3533) est raccordée aux premier et second éléments d'enroulement (351 ; 352) et de manière telle qu'au moins une des sections (3531, 3532, 3533) est raccordée à seulement un des premier et second éléments d'enroulement (351 ; 352), et
le scellage d'un obturateur (60 ; 60A, 60B, 60C) dans un premier trou (355) du canal de refroidissement (45), le canal de refroidissement étant prévu dans les premier et second éléments d'enroulement (351) ainsi que l'élément de base (353 ; 353B) et étant approprié pour entraîner l'écoulement d'un fluide de refroidissement (450) à travers les premier et second éléments d'enroulement (351 ; 352) ainsi que l'élément de base (353 ; 353B), ce premier trou (355) est ouvert vers l'extérieur d'un des éléments (351, 352, 353), en commandant un mouvement de l'obturateur (60 ; 60A, 60B, 60C) relativement au premier trou (355) de telle sorte qu'un joint de soudage à l'état solide (600 ; 601 ; 602) est produit par un matériau de l'obturateur (60 ; 60A, 60B, 60C) et un matériau du module d'enroulement (35A ; 35B), dans lequel le premier trou (355) est positionné,
dans lequel le support (70) supporte le module d'enroulement (35A ; 35B) de manière telle qu'un mouvement entre le module d'enroulement (35A ; 35B) et le support (70) est empêché alors que l'étape de scellage est réalisée.

2. Procédé selon la revendication 1, dans lequel le joint de soudage à l'état solide (600 ; 601 ; 602) est produit par coalescence de surfaces de contact de l'obturateur (60 ; 60A, 60B, 60C) et du premier trou (355) à une température inférieure au point de fusion des matériaux sans fournir de matériau de jonction supplémentaire.

3. Procédé selon la revendication 1 ou 2, dans lequel le joint de soudage à l'état solide (600 ; 601 ; 602) est produit par soudage par ultrasons ou soudage par friction rotative ou soudage par friction.

4. Procédé selon l'une quelconque des revendications 1 à 3, dans lequel le mouvement de l'obturateur (60 ; 60A ; 60B ; 60C) relativement au premier trou (355) est commandé de telle sorte que le trou (355) scellé par le joint de soudage à l'état solide (600 ; 601 ; 602) résiste sans fuite à une pression maximale de 12 * 100 kPa qui est exercée par un agent de refroidissement (450).

5. Procédé selon l'une quelconque des revendications 1 à 4, dans lequel le matériau de l'obturateur (60 ; 60A ; 60B ; 60C) et le matériau, dans lequel le premier trou (355) est positionné, est le même.

6. Procédé selon l'une quelconque des revendications 1 à 5,
dans lequel l'obturateur (60B) a un épaulement (65) sur le côté de l'obturateur (60B) qui est inséré dans le premier trou (355) avant que l'étape de scellage soit réalisée.

7. Procédé selon l'une quelconque des revendications 1 à 6, comprenant en outre au moins une étape des étapes de
le fraisage des premiers trous (355) dans les premier et second éléments d'enroulement (351, 352) ainsi que l'élément de base (353 ; 353B) pour former le canal de refroidissement (45) dans le module d'enroulement (35A ; 35B), et
la fourniture, à chaque premier trou (355), d'un joint de soudage à l'état solide (600 ; 601 ; 602) pour sceller le canal de refroidissement (45) à l'extérieur du module d'enroulement (35A ; 35B), et
le fraisage de seconds trous (356) dans l'élément de base (353 ; 353B), et
la fourniture, à au moins un des seconds trous (356), d'une pièce d'insertion (3561) pour raccorder le module d'enroulement (35A ; 35B) à d'autres parties d'une unité transformateur-redresseur (30, 40).

8. Procédé selon l'une quelconque des revendications 1 à 7 réalisée par un dispositif (80 ; 80A ; 80B) pour produire le joint de soudage (600 ; 601 ; 602) dans le canal de refroidissement (45) pour l'enroulement (35) pour le transformateur de soudage (30), le dispositif comprenant
une unité de commande (84 ; 84A ; 84B) pour commander un mouvement de l'obturateur (60 ; 60A, 60B, 60C) dans le premier trou (355), et
un support (70) pour supporter le module d'enroulement (35A ; 35B) de l'enroulement (35) lors du scellage de l'obturateur (60 ; 60A, 60B, 60C) dans le premier trou (355).

9. Enroulement (35) pour un transformateur de soudage (30), l'enroulement (35) comprenant un module d'enroulement (35A ; 35B) qui comprend
un premier élément d'enroulement (351) encadrant au moins une fenêtre (3511 ; 3512) destinée à recevoir une partie d'un noyau (37) du transformateur de soudage (30),
un second élément d'enroulement (352) encadrant au moins une fenêtre (3521 ; 3522) destinée à recevoir une partie du noyau (37) du transformateur de soudage (30), et
un élément de base (353 ; 353B),
dans lequel chacun des premier et second éléments d'enroulement (351 ; 352) fait saillie à partir de l'élément de base (353 ; 353B),
dans lequel les premier et second éléments d'enroulement (351 ; 352) sont positionnés de façon espacée l'un de l'autre sur l'élément de base (353 ; 353B) de telle sorte que le module d'enroulement (35A ; 35B) a une section transversale en t, et
dans lequel l'élément de base (353 ; 353B) comprend des rainures (3534, 3535) qui séparent l'élément de base (353 ; 353B) en sections (3531, 3532, 3533), et
dans lequel au moins une des sections (3531, 3532, 3533) est raccordée aux premier et second éléments d'enroulement (351 ; 352), et
dans lequel au moins une des sections (3531, 3532, 3533) est raccordée à seulement un des premier et second éléments d'enroulement (351 ; 352),
dans lequel les premier et second éléments d'enroulement (351) ainsi que l'élément de base (353 ; 353B) comprennent un canal de refroidissement (45) pour entraîner l'écoulement d'un fluide de refroidissement (450) à travers les premier et second éléments d'enroulement (351 ; 352) ainsi que l'élément de base (353 ; 353B), et
**caractérisé en ce qu'**un obturateur (60 ; 60A, 60B, 60C) est scellé dans un premier trou (355) du canal de refroidissement (45) sous forme de joint de soudage à l'état solide (600 ; 601 ; 602) produit par le matériau de l'obturateur (60 ; 60A, 60B, 60C) et le matériau dans lequel le premier trou (355) est positionné.

10. Enroulement (35) selon la revendication 9,
dans lequel chacun des premier et second éléments d'enroulement (351 ; 352) comprend au moins un premier trou (355) pour former le canal de refroidissement (45), et
dans lequel au moins un premier trou (355) dans les premier et/ou second éléments d'enroulement (351 ; 352) est un trou aveugle et au moins un premier trou (355) dans les premier et/ou second éléments d'enroulement (351 ; 352) est un trou débouchant de telle sorte que les premiers trous (355) se croisent pour former le canal de refroidissement (45).

11. Enroulement (35) selon la revendication 9 ou 10,
dans lequel le premier élément d'enroulement (351) forme un cadre pour deux fenêtres (3511 ; 3512),
dans lequel les fenêtres (3511 ; 3512) du premier élément d'enroulement (351) sont espacées l'une de l'autre dans le premier élément d'enroulement (351),
dans lequel le second élément d'enroulement (352) forme un cadre pour deux fenêtres (3521 ; 3522), et
dans lequel les fenêtres (3521 ; 3522) du second élément d'enroulement (352) sont espacée l'une de l'autre dans le second élément d'enroulement (352).

12. Enroulement (35) selon l'une quelconque des revendications 9 à 11, dans lequel le matériau du module d'enroulement (35A ; 35B) est un métal, en particulier du cuivre ou de l'aluminium.

13. Transformateur de soudage (30), comprenant
un noyau (37),
un enroulement primaire (34), et
un enroulement (35) selon l'une quelconque des revendications 9 à 12,
dans lequel l'enroulement (35) est positionné sur le côté secondaire du transformateur (30), et
dans lequel l'enroulement primaire (34) est monté sur le noyau (37) et sur l'enroulement secondaire (35).

14. Outil de soudage (10) pour produire un article (4), comprenant
un transformateur de soudage (30) selon la revendication 13, et
une unité de commande (20) configurée pour adapter un courant de soudage (I2) pour former l'article (4) en joignant au moins deux parties d'une pièce à travailler (5) et/ou au moins deux pièces à travailler (5 ; 6) par au moins un joint de soudage (7).

15. Dispositif de soudage (2), comprenant
un outil de soudage (10) selon la revendication 14, et
un dispositif (50) pour déplacer l'outil de soudage (10) selon un profil de déplacement prédéterminé le long de l'au moins une pièce à travailler (5 ; 5, 6),
dans lequel l'article (4) est une carrosserie de véhicule.
